# FASCICULE DE BREVET EUROPEEN

(11) **EP 2 100 541 B1**
(45) Date de publication et mention de la délivrance du brevet: **06.05.2015**
(21) Numéro de dépôt: 09290173.5
(22) Date de dépôt: 11.03.2009
(51) Int. Cl.: A47F 5/10, A47F 5/11, G09F 1/06

(54) **Support élémentaire de présentoir d'objet comprenant une case polyédrique articulée**
Elementarer Unterbau eines Verkaufsständers für Gegenstände, der eine polyedrisch geformte Box mit Gelenkstruktur umfasst
Elementary support for an object display comprising an articulated polyhedral case

(30) Priorité: 12.03.2008 FR 0801347
(43) Date de publication de la demande: 16.09.2009
(73) Titulaire: L'Hôtel, François, 75016 Paris (FR)
(72) Inventeur: L'Hôtel, François, 75016 Paris (FR)
(74) Mandataire: Argyma

(56) Documents cités:
- EP-A- 0 231 530
- WO-A-2004/027737
- WO-A-2005/004677
- CA-A1- 975 961
- GB-A- 467 854
- US-A- 3 300 166
- US-A- 4 854 060

## Description

Le domaine de l'invention est celui des présentoirs repliables sur eux-mêmes et dépliables quasi-automatiquement, avec, pour avantage, de pouvoir être transportés et stockés dans d'excellentes conditions, d'une part, et d'être rapidement installés sur site, d'autre part.

A partir d'un état replié, il suffit de commencer à déplier le support pour que, sous l'action de moyens élastiques de rappel, il se déplie complètement automatiquement.

Naturellement, à l'inverse, le repliement du support s'effectue contre l'action des moyens de rappel.

Le demandeur développe de tels présentoirs depuis longtemps.

Il avait commencé par des présentoirs supports d'informations. De tels présentoirs peuvent servir à la communication ou publicité visuelle sur les lieux de vente, dite PLV, et se présenter sous forme de colonne. De tels présentoirs sont décrits dans le document FR 2 824 946.

Puis, le demandeur a proposé des présentoirs supports dont l'espace intérieur, dans l'état déployé, est laissé libre pour pouvoir y glisser un objet ou glisser le support autour d'un objet, qui dépasse ou non du support. Ces présentoirs sont décrits dans la demande de brevet français 07 02 817 du 18 avril 2007.

Le demandeur avait d'ailleurs auparavant déjà proposé des colonnes supports d'informations pour PLV permettant aussi de recevoir des objets, comme celles décrites dans le document FR 2847062.

Et bien aujourd'hui, le demandeur propose des présentoirs réalisés sur un principe similaire, mais destinés tout d'abord à supporter ou présenter des objets et, accessoirement, des informations.

On connaît déjà, par le document WO2005/004677, un support élémentaire de présentoir d'objet comprenant une case polyédrique articulée pour évoluer entre un état replié à plat et un état fonctionnel déplié et ouvert pour recevoir un objet, des moyens escamotables de maintien de la case dans son état déplié et ouvert et des moyens élastiques de rappel des moyens de maintien en position non escamotée de maintien, la mise à plat de la case s'effectuant par escamotage des moyens de maintien contre l'action des moyens élastiques.

On rappellera qu'un polyèdre est un corps à faces planes.

La case du document antérieur ne permet toutefois pas de supporter un corps ou tout objet d'un poids important.

Ainsi, l'invention de la présente demande concerne tout d'abord un support élémentaire du type défini ci-dessus, caractérisé par le fait que la case comporte un manchon polyédrique avec des arêtes d'articulation et au moins une paroi escamotable de maintien pivotante, les arêtes d'articulation délimitant une face plancher et une face plafond de la case et la paroi escamotable de maintien pivotante étant agencée pour assurer, entre ces faces plafond et plancher, une fonction d'étaiement.

La paroi de maintien est une paroi d'étaiement escamotable.

Dans ces conditions, la case peut facilement supporter sur la surface plafond un corps ou tout objet d'un poids important, voire un autre support élémentaire et même une pluralité de ces supports.

En d'autres termes, à l'état déplié et ouvert de la case, la face plafond et la paroi d'étaiement forment, jusqu'au sol, une descente de force.

Dans une première forme de réalisation, la paroi de maintien est montée pivotante autour d'une arête orthogonale aux arêtes d'articulation et extérieure du manchon polyédrique.

Dans d'autres formes de réalisation, la paroi de maintien est montée pivotante autour d'une arête intérieure au manchon.

Dans la première forme de réalisation, la case support comporte un unique compartiment, dans les autres formes de réalisation, elle peut en comporter deux.

Dans une forme de réalisation particulière, la paroi de maintien est montée pivotante autour d'une arête parallèle aux arêtes d'articulation.

Dans ce cas, la paroi de maintien est peut-être évidée comme les faces de la case qui lui sont parallèles dans les états repliés et dépliés de la case.

Toujours dans ce cas, on peut prévoir des parois de maintien secondaires montées librement pivotantes autour d'arêtes extérieures du manchon polyédrique.

L'invention concerne également un ensemble de plusieurs supports élémentaires tels que définis ci-dessus.

L'invention sera mieux comprise à l'aide de la description suivante de plusieurs formes de réalisation du support élémentaire et de l'ensemble de supports élémentaires de l'invention, en référence au dessin en annexe, sur lequel
- la figure 1 est une vue en perspective de face d'une première forme de réalisation du support élémentaire de présentoir ;
- la figure 2 est une vue en perspective arrière du support de la figure 1;
- la figure 3 est une vue en perspective de face d'un ensemble de deux secondes formes de réalisation du support élémentaire de présentoir et
- la figure 4 est une vue en perspective d'une troisième forme de réalisation du support élémentaire de présentoir de l'invention.

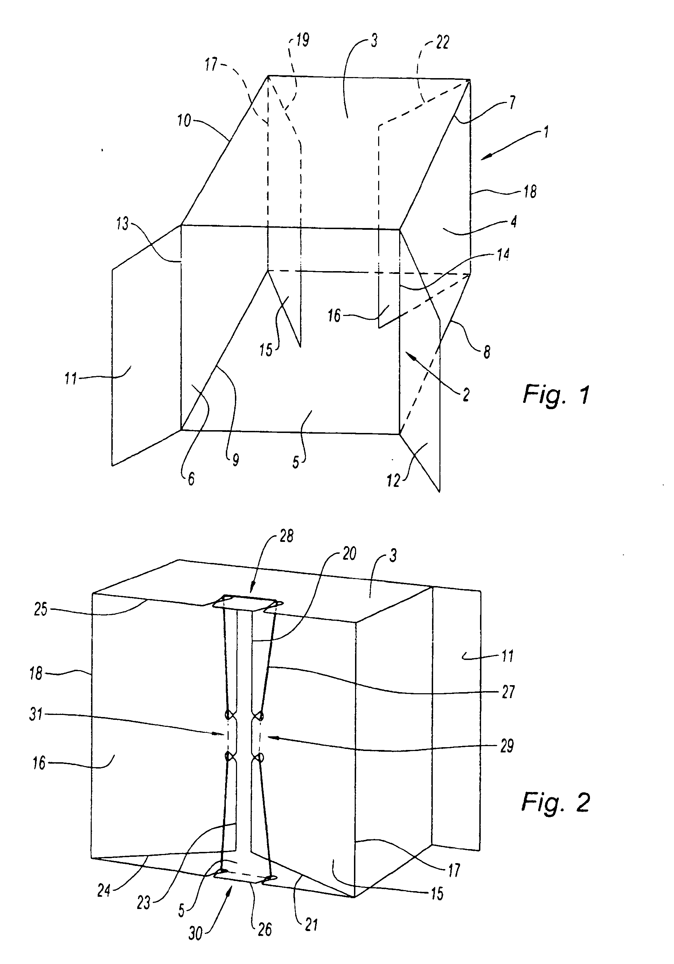

En référence aux figures 1 et 2, va maintenant être décrite une première forme de réalisation du support élémentaire de présentoir de l'invention. Il s'agit d'une case polyédrique 1, en l'occurrence parallélépipédique, avec un manchon 2 à quatre faces 3-6 réunies par leurs arêtes communes 7-10 constituant des arêtes d'articulation.

D'un côté, le manchon 2 est quasiment ouvert, avec seulement deux petits rabats 11, 12 articulés autour de deux arêtes 13, 14 des deux faces opposées 6,4 de la case 1, les arêtes 13, 14 étant perpendiculaires et orthogonales aux arêtes d'articulation 7-10. De l'autre côté, le manchon 2 peut être fermé par deux rabats escamotables 15, 16 de maintien de la case 1 dans un état déplié et ouvert, comme cela va maintenant être expliqué.

Les deux rabats de maintien 15, 16 sont montés pivotants autour des deux arêtes 17, 18 des faces 6,4 opposées aux arêtes 13, 14 d'articulation des deux petits rabats antérieurs 11, 12. La somme de leurs largeurs est sensiblement égale à la largeur du manchon 2 à l'état ouvert, c'est-à-dire à la largeur des deux faces plancher 5 et plafond 3 du manchon 2.

Des échancrures sont ménagées depuis les trois bords libres 19, 20, 21 et 22, 23, 24 des deux rabats de maintien 15, 16 ainsi que depuis les deux bords arrières 25, 26 des faces 3, 5, échancrures terminées par des oeillets de réception d'un élastique de rappel 27. Ainsi, l'élastique 27 est passé dans une paire d'oeillets 28 de la face 3, près du bord 25, une paire d'oeillets 29 du rabat 15, près de son bord 20, une paire d'oeillets 30 de la face 5, près du bord 26, et une paire d'oeillets 31 du rabat 16, près de son bord 23.

Ainsi, la case 1 peut évoluer entre un état replié à plat et un état fonctionnel déplié et ouvert pour recevoir un objet dans son unique compartiment. A plat, les faces du manchon 2 sont deux à deux l'une sur l'autre 3, 4 et 5, 6 après pivotement autour des quatre arêtes d'articulation 7-10. Le manchon est maintenu à l'état ouvert par les rabats de maintien 15, 16 pivotés autour des arêtes extérieures 17, 18, orthogonales aux arêtes d'articulation, sous l'action de l'élastique 27, qui a disposé les quatre paires d'oeillets 28-31 sensiblement, dans un plan commun pour diminuer sa tension, les bords 19, 21 et 22, 24 des deux rabats 15, 16 venant sensiblement dans le plan des deux bords 25, 26 pour servir d'appui aux deux faces 3, 5. Les deux rabats sont alors en position non escamotée de maintien et assurent une fonction d'étaiement entre la face plancher 5 et la face plafond 3.

La mise à plat de la case 1 (du manchon 2) s'effectue en escamotant les rabats 15, 16, c'est-à-dire en les faisant pivoter autour de leurs arêtes 17, 18, contre l'action de l'élastique de rappel 27, et en les rabattant contre l'intérieur des faces 6, 4.

Naturellement, une pluralité de cases comme la case 1 qui vient d'être décrite peuvent être empilées ou juxtaposées les unes sur les autres ou à côté des autres, par tout moyen de fixation approprié, par exemple par collage.

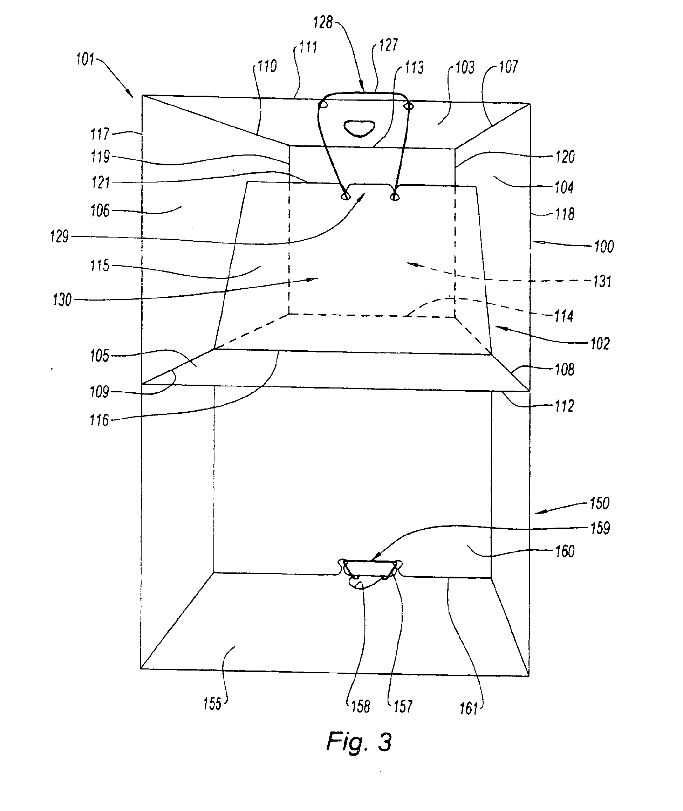

En référence à la figure 3, va maintenant être décrit un ensemble de deux secondes formes de réalisation du support élémentaire de présentoir de l'invention. L'élément 100, représenté au-dessus de l'autre 150 sur la figure 3 - les deux éléments ne différent que par la fixation de l'élastique de rappel - est aussi une case parallélépipédique 101, avec un manchon 102 à quatre faces 103-106 réunies par leurs arêtes communes 107-110 constituant des arêtes d'articulation.

Une paroi de maintien escamotable 115 est montée pivotante autour d'une ligne centrale 116 de la face 105, ligne s'étendant orthogonalement aux arêtes d'articulation de la case et sensiblement à égales distances des bords antérieurs 111, 112 et postérieurs 113, 114 de la case, bords perpendiculaires aux arêtes d'articulation de la case et appartenant aux faces supérieure 103 et inférieure 105 de la case. La paroi de maintien est rectangulaire et correspond à la section d'ouverture du manchon 102, de largeur égale à la longueur des bords 111-114 et de hauteur égale à la longueur des arêtes 117-120 reliant les arêtes d'articulation 107-110.

Des échancrures sont ménagées depuis le bord antérieur 111 de la face 103 de la case et depuis le bord libre 121 de la paroi de maintien 115, opposé à son bord de pivotement 116, échancrures terminées par des oeillets de réception d'un élastique de rappel 127.

Ainsi, l'élastique est passé dans une paire d'oeillets 128 de la face 103, près du bord 111, et dans une paire d'oeillets 129 de la paroi de maintien 115, près de son bord libre 121. L'élastique s'étend ici directement de l'une des deux paires d'oeillets 128, 129 à l'autre.

Ainsi, la case 100 peut évoluer entre un état replié à plat et un état fonctionnel déplié et ouvert pour recevoir un ou plusieurs objets. A l'état fonctionnel, la case comporte deux compartiments 130, 131, un de chaque côté de la paroi de maintien 115.

A plat, les faces du manchon 102 sont deux à deux l'une sur l'autre 103, 104 et 105, 106, après pivotement autour des quatre arêtes d'articulation 107-110.

Le manchon est maintenu à l'état ouvert par la paroi de maintien 115 pivotée autour de son arête 116, orthogonale aux arêtes d'articulation, sous l'action de l'élastique 127 qui a rapproché l'une de l'autre les deux paires d'oeillets 128, 129, la paroi de maintien venant sensiblement dans un plan perpendiculaire aux quatre faces 103-106 du manchon 102 de la case 100, auxquelles elle sert d'appui. La paroi 115 est alors en position non escamotée de maintien de la case 100 en position ouverte.

La mise à plat de la case 101 du manchon 102 s'effectue en escamotant la paroi 115, c'est-à-dire en la faisant pivoter autour de son arête d'articulation 116 et en la poussant et en la rabattant contre la face inférieure 105, en rapprochant son bord libre 121 du bord postérieur 114 de cette face inférieure 105.

L'autre élément 150 est fixé à l'élément 100, ici par collage. Il se distingue de l'élément associé 100 par la fixation de l'élastique de rappel 157 et l'inversion du pivotement de la paroi de maintien. La face inférieure 155 du manchon de la case 150, tout comme d'ailleurs, la face supérieure 103 de la case 100, comporte une ouverture centrale 158. Et bien au lieu de tendre l'élastique 157 entre la paire d'oeillets 159 du bord libre 161 de la paroi de maintien escamotable 160, d'une part, et la paire d'oeillets du bord postérieur inférieur de la face inférieure 155, d'autre part, par l'intérieur de la case, comme précédemment, l'élastique 157 est ici passé à l'extérieur de la case, à travers l'ouverture centrale 158.

On notera que les arêtes de pivotement des deux parois 115 et 160 des deux cases 100 et 150 sont opposées, l'une en bas, sur la figure 3, sur la face inférieure 105, l'autre, en haut, sur la face supérieure de la case 150 ici confondue avec la face inférieure de la case associée.

On remarquera, en référence à la figure 3, que si la force de l'élastique 127 n'est pas suffisante pour pivoter correctement la paroi de maintien 115, c'est-à-dire pour la faire venir dans un plan perpendiculaire aux faces 103, 105, alors, la paroi de maintien 115 ne peut pas assurer sa fonction d'étaiement entre ces deux faces plafond et plancher. C'est pourquoi, on préferera utiliser la case 100, et donc la case 150, dans une position tournée de 90° par rapport à celle illustrée sur la figure 3, pour que la paroi de maintien 115, même si elle n'est pas parfaitement pivotée, assure quand même sa fonction d'étaiement entre les faces, non plus 103 et 105, mais entre les faces 104 et 106, perpendiculaires aux faces 103 et 105. Dans ce cas, la paroi de maintien 115, en position non escamotée, formera toujours avec ces faces 104, 106 une descente de force pour servir de support à un corps de poids important.

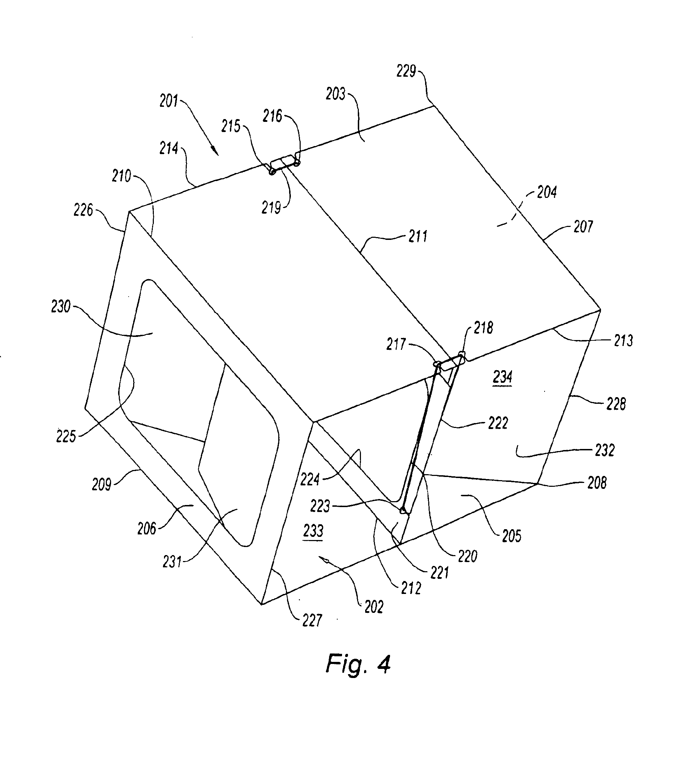

En référence à la figure 4, le support élémentaire comprend toujours une case polyédrique 201 parallélépipédique, avec un manchon 202 à quatre faces 203-206 réunies par quatre arêtes d'articulation extérieures 207-210.

Les deux faces supérieure 203 et inférieure 205 peuvent être pliées en deux le long de deux arêtes de pliage, d'articulation et de pivotement intérieures 211, 212, parallèles aux arêtes d'articulation extérieures.

Une paroi escamotable 221, sensiblement de mêmes dimensions que les faces latérales 204, 206 du manchon 202, est montée pivotante autour de l'arête inférieure de pivotement 212 de la face inférieure 205 du manchon 202.

Des échancrures sont ménagées dans la face supérieure 203 du manchon 202, de part et d'autre de la ligne de pliage 211 de la face 203 du manchon 202, et depuis les bords 213, 214 de la face 203, perpendiculaires aux arêtes 207, 210, échancrures qui se terminent par des oeillets 215-218 de réception d'élastiques de rappel 219, 220. Des échancrures sont également ménagées dans la paroi escamotables 221, depuis ses deux bords 222 orthogonaux aux arêtes d'articulation 207-210, près de l'arête de pivotement 212, et qui se terminent par des oeillets 223 de réception des élastiques de rappel 219-220.

Dans la forme de réalisation de la figure 4, la paroi escamotable 221, tout comme les faces latérales 204, 206 du manchon 202 sont évidées 224, 225.

Quatre autres parois escamotables 230-232 sont prévues, montées pivotantes autour des quatre arêtes extérieures 226-229 du manchon 222, orthogonales aux arêtes d'articulation 207-210.

Ainsi, la case 201 peut évoluer entre un état replié à plat et un état fonctionnel déplié et ouvert pour recevoir un ou plusieurs objets.

A l'état fonctionnel (figure 4), la case comporte deux compartiments 233, 234, un de chaque côté de la paroi escamotable 221, en position non escamotée, relevée et de maintien des faces supérieure 203 et inférieure 205, le long des lignes 211, 212, face avec lesquelles la paroi escamotable forme une descente de force pour servir de support à un corps de poids important.

Cette position relevée de la paroi médiane 221 a été atteinte sous l'action des élastiques de rappel 219, 220. Pour parfaire le maintien du manchon 202 dans sa forme parallélépipédique, on a fait pivoter les parois de maintien secondaires 230-232 autour de leurs arêtes de pivotement, depuis leur positions plaquées contre les faces latérales 206, 204 jusque dans leur position de maintien des faces supérieure 203 et inférieure 205, sensiblement orthogonales aux faces 203-206 du manchon 202.

La mise à plat de la case 201 s'effectue en rabattant les parois de maintien secondaires 230-232 contre les faces latérales du manchon et, contre l'action des élastiques de rappel 219-, 220, en faisant pivoter la paroi de maintien médiane 221 autour de son arête de pivotement 212. Lors de cette mise à plat, les deux faces 203, 205 se plient en deux le long des lignes 211, 212, les deux faces latérales 204, 206 venant l'une contre l'autre avec interposition de la partie supérieure libre de la paroi de maintien médiane 221.

## Revendications

1. Support élémentaire de présentoir d'objet comprenant une case polyédrique (1 ;101 ;201) articulée pour évoluer entre un état replié à plat et un état fonctionnel déplié et ouvert pour recevoir un objet, des moyens escamotables (15, 16 ; 115 ; 221) de maintien de la case dans son état déplié et ouvert et des moyens élastiques (27 ; 127 ; 219 ; 220) de rappel des moyens de maintien en position non escamotée de maintien, la mise à plat de la case s'effectuant par escamotage des moyens de maintien contre l'action des moyens élastiques, **caractérisé par le fait que** la case comporte un manchon polyédrique (2 ; 102 ; 202), avec des arêtes d'articulation (7-10 ; 107-110 ; 207-210) et au moins une paroi escamotable de maintien pivotante (15, 16; 115, 221), la paroi escamotable de maintien pivotante (15, 16 ; 115, 221) étant une paroi d'étaiement entre une face plancher (5 ; 105 ; 205) et une face plafond (3 ; 103 ; 203) avec lesquelles elle forme une descente de force.

2. Support selon la revendication 1, dans lequel la paroi de maintien escamotable (15, 16 ; 115) est agencée pour pivoter autour d'une arête (17, 18; 116) orthogonale aux arêtes d'articulation du manchon.

3. Support selon l'une des revendications 1 et 2, dans lequel la paroi de maintien (11, 12) est montée pivotante autour d'une arête extérieure (13, 14) du manchon polyédrique.

4. Support selon l'une des revendications 1 et 2 dans lequel la paroi de maintien (115 ; 221) est montée pivotante autour d'une arête (116 ; 212) intérieure au manchon (102 ; 202).

5. Support selon l'une des revendications 1 à 3, dans lequel la case support (1) comporte un unique compartiment.

6. Support selon l'une des revendications 1, 2 et 4, dans lequel la case support (101 ; 201) comporte deux compartiments (130, 131 ; 233, 234).

7. Support selon l'une des revendications 1, 4 et 6, dans lequel la paroi de maintien (221) est montée pivotante autour d'une arête (212) parallèle aux arêtes d'articulation.

8. Support selon la revendication 7, dans lequel la paroi de maintien (221), est évidée comme les faces (204, 206) de la case (201) qui lui sont parallèles dans les états replié et déplié de la case.

9. Support selon la revendication 8, dans lequel sont prévues des parois de maintien secondaires (230-232) montées librement pivotantes autour d'arêtes extérieures (226-229) du manchon polyédrique (202).

10. Ensemble de plusieurs supports élémentaires (1 ; 100, 150 ; 201) selon l'une des revendications 1 à 9.

## Patentansprüche

1. Basisträger eines Artikelpräsentationselements, der ein vielflächiges Gehäuse (1; 101; 201) aufweist, das gelenkig ist, um sich zwischen einem flach gefalteten Zustand und einem funktionalen aufgefalteten und offenen Zustand zum Aufnehmen eines Artikels zu bewegen, einziehbare Mittel (15, 16; 115; 221) zum Halten des Gehäuses in seinem aufgefalteten und offenen Zustand, und elastische Mittel (27; 127; 219; 220) zum Zurückstellen der Haltemittel in nicht eingefahrene Halteposition, wobei das flache Zusammenlegen des Gehäuses durch Einziehen der Haltemittel gegen die Wirkung der elastischen Mittel erfolgt, **dadurch gekennzeichnet, dass** das Gehäuse eine vielflächige Hülse (2; 102; 202) mit Anlenkkanten (7-10; 107-110; 207-210) und mindestens einer einziehbaren schwenkenden Haltewand (15, 16; 115, 221) aufweist, wobei die einziehbare schwenkende Haltewand (15, 16; 115, 221) eine Stützwand zwischen einer Bodenfläche (5; 105; 205) und einer Deckenfläche (3; 103; 203), mit der sie eine Kraftabsenkung bildet, ist.

2. Träger nach Anspruch 1, bei dem die einziehbare Haltewand (15, 16; 115) eingerichtet ist, um um eine Kante (17, 18; 116), die zu den Anlenkkanten der Hülse orthogonal ist, zu schwenken.

3. Träger nach einem der Ansprüche 1 und 2, bei dem die Haltewand (11, 12) schwenkend um eine äußere Kante (13, 14) der vielflächigen Hülse montiert ist.

4. Träger nach einem der Ansprüche 1 und 2, bei dem die Haltewand (115; 221) schwenkend um eine innere Kante (116; 212) an der Hülse (102; 202) montiert ist.

5. Träger nach einem der Ansprüche 1 bis 3, bei dem das Traggehäuse (1) ein einziges Gehäuse aufweist.

6. Träger nach einem der Ansprüche 1, 2 und 4, bei dem das Traggehäuse (101; 201) zwei Fächer (130, 131; 233, 234) aufweist.

7. Träger nach einem der Ansprüche 1, 4 und 6, bei dem die Haltewand (221) schwenkend um eine Kante (212), die zu den Anlenkkanten parallel ist, montiert ist.

8. Träger nach Anspruch 7, bei dem die Haltewand (221) wie die Flächen (204, 206) des Gehäuses (201) die zu ihr im gefalteten und aufgefalteten Zustand des Gehäuses parallel sind, ausgehöhlt sind.

9. Träger nach Anspruch 8, bei dem Sekundärhaltewände (230-232) vorgesehen sind, die frei um externe Kanten (226-229) der vielflächigen Hülse (202) schwenkend montiert sind.

10. Einheit aus mehreren Basisträgern (1; 100, 150; 201) nach einem der Ansprüche 1 bis 9.

## Claims

1. Elementary support for an object display, comprising a polyhedral box (1; 101; 201) articulated to switch between a flat folded state and a functional unfolded state in which it is open to receive an object, retractable means (15, 16; 115; 221) for holding the box in its unfolded, open state, and resilient means (27; 127; 219; 220) for biasing the holding means in the non-retracted holding position, the flattening of the box being carried out by retracting the holding means counter to the action of the resilient means, **characterised in that** the box comprises a polyhedral sleeve (2; 102; 202), with articulation edges (7-10; 107-110; 207-210) and at least one pivoting retractable holding wall (15, 16; 115, 221), the pivoting retractable holding wall (15, 16; 115, 221) being a shoring wall between a floor surface (5; 105; 205) and a ceiling surface (3; 103; 203) with which it produces a downward application of force.

2. Support according to claim 1, wherein the retractable holding wall (15, 16; 115) is arranged to pivot about an edge (17, 18; 116) orthogonal to the articulation edges of the sleeve.

3. Support according to one of claims 1 and 2, wherein the holding wall (11, 12) is mounted to be pivotable about an outer edge (13, 14) of the polyhedral sleeve.

4. Support according to one of claims 1 and 2, wherein the holding wall (115; 221) is mounted to be pivotable about an edge (116; 212) inside the sleeve (102; 202).

5. Support according to one of claims 1 to 3, wherein the support box (1) comprises a single compartment.

6. Support according to one of claims 1, 2 and 4, wherein the support box (101; 201) comprises two compartments (130, 131; 233, 234).

7. Support according to one of claims 1, 4 and 6, wherein the holding wall (221) is mounted to be pivotable about an edge (212) parallel to the articulation edges.

8. Support according to claim 7, wherein the holding wall (221) is recessed like the surfaces (204, 206) of the box (201) that are parallel thereto in the folded and unfolded states of the box.

9. Support according to claim 8, wherein secondary holding walls (230-232) are provided which are mounted to be freely pivotable about outer edges (226-229) of the polyhedral sleeve (202).

10. Set of several elementary supports (1; 100, 150; 201) according to one of claims 1 to 9.
